# EUROPÄISCHE PATENTANMELDUNG

(11) **EP 0 945 945 A2**
(43) Veröffentlichungstag der Anmeldung: **29.09.1999**
(21) Anmeldenummer: 99104568.3
(22) Anmeldetag: 08.03.1999
(51) Int. Cl.: H02G 3/04

(54) **Versorgungs-Säule**

(30) Priorität: 26.03.1998 DE 29805502 U
(71) Anmelder: Müller, Eckhard, 35781 Weilburg/Lahn (DE)
(72) Erfinder: Müller, Eckhard, 35781 Weilburg/Lahn (DE)
(74) Vertreter: Missling, Arne, Dipl.-Ing.

(57) **Zusammenfassung**

Um frei liegende Kabel in großen Wohn- und Arbeitsräumen zu vermeiden, ist eine Versorgungs-Säule frei im Raum stehend installierbar, deren Säulen-Korpus von einem Strangpreßprofil gebildet wird und die abdeckbare Sektionen zur Aufnahme von Armaturen hat, die an Energiezuführungen anschließbar sind, welche innerhalb des Säulen-Korpus verlaufen. Die Sektionen sind in einfacher Weise zwischen den Armaturen mit Deckein verschließbar, die rastend an dem Stangpreßprofil angebracht werden können. Die Versorgungs-Säule kann zwischen Raumboden und -decke einspannbar oder auch nur auf dem Raumboden befestigt sein.

## Beschreibung

Die Erfindung betrifft eine Versorgungs-Säule mit einer integrierten Energiezuführung, vorzugsweise einer elektrischen Stromzuführung, bestehend aus einem im wesentlichen hohlen Säulen-Korpus und den Säulen-Korpus stirnseitig abschließenden Endstücken, wobei der Säulen-Korpus mit an die Energiezuführung anschließbaren Armaturen wie Steckdosen, Schaltern oder dergleichen bestückbar und die Versorgungs-Säule wandunabhängig installierbar ist.

Versorgungs-Säulen dieser Art sind insbesondere zur Verteilung von elektrischer Energie in (großen) Wohn- und Arbeitsräumen geeignet, wo auf diese Weise lange Verlängerungskabel oder ganze Kabelstränge vermieden werden können. Versorgungs-Säulen hingegen können je nach Bedarf mitten im Raum und dort an Stellen aufgestellt werden, an denen viele Verbraucher installiert werden müssen und/oder an Wänden oder Fußleisten installierte Steckdosen für die Verbraucher zu weit entfernt sind. Sie sind vorrangig, aber nicht ausschließlich für die Verteilung von Elektroenergie geeignet, und es können beispielsweise auch Druckluft- oder Hydraulikkreisläufe mit ihnen ausgerüstet werden.

Die Erfindung hat sich die Aufgabe gestellt, eine Versorgungs-Säule der eingangs beschriebenen Art so aufzubauen, daß sie rationell herstellbar und in einfacher Weise mit den erforderlichen Armaturen bestückbar ist. Sie soll ferner in einem Raum sowohl zwischen Decke und Boden einspannbar als auch verkürzt und lediglich bodenbefestigbar sein. Dabei soll die Anordnung so getroffen sein, daß die Energiezuführungen verdeckt und das Innere der Versorgungs-Säule gegen unbefugten Eingriff geschützt ist und gefahrlos betrieben werden kann. Die Versorgungs-Säule soll vorteilhaft mindestens partiell um ihre Längsachse drehbar sein.

Erfindungsgemäß wird die Aufgabe dadurch gelöst, daß der Säulen-Korpus als in Richtung seiner Längsachse verlaufendes Strangpreßprofil ausgebildet ist, dessen Querschnitt in mindestens zwei an dem Umfang des Säulen-Korpus mit jeweils einem Längsschlitz zur Umgebung hin offene, durch eine oder mehrere Trennwände voneinander geschiedene Sektionen unterteilt ist, in denen parallel zu der Längsachse und dieser benachbart jeweils mindestens eine profilierte, durchgehende Montageleiste für die Armaturen vorgesehen ist, und daß ferner der Säulen-Korpus mit mindestens einem Endstück begrenzt drehbeweglich verbunden ist.

Auf diese Weise ist der Säulen-Korpus der Versorgungs-Säule sehr einfach im hochproduktiven Strangpreßverfahren oder Extrusion beispielsweise aus einem Leichtmetall oder Kunststoff herstellbar, wobei die Armaturen an beliebiger Stelle und in hoher Stückzahl an das Strangpreßprofil anbaubar sind und jederzeit auch ausgewechselt oder versetzt werden können. Der gesamte übrige Bereich der Sektionen hingegen ist mit den Deckeln abschließbar, so daß eine unfallsichere Ausführung gewährleistet ist, die zudem noch formschön ausgebildet sein kann.

Eine besonders einfach herstellbare und sehr formstabile Ausführung einer erfindungsgemäßen Versorgungs-Säule entsteht, wenn der Säulen-Korpus aus drei Sektionen besteht, die durch - im Querschnitt des Säulen-Korpus von der Längsachse ausgehend - radial zu dem Umfang des Säulen-Korpus hin gerichtete Trennwände voneinander geschieden sind, wobei jeweils zwei Trennwände einen Winkel von 120° einschließen und an ihrer äußeren Längskante einstückig und symmetrisch an - ungefähr dem kreiszylindrischen Umfang der Versorgungs-Säule folgende - Mantelstücke anschließen, von denen jeweils zwei mit ihren frei endenden Längskanten einen der Längsschlitze ausbilden, und wobei ferner in den Zwickeln zwischen den Trennwänden jeweils zwei parallele, T-förmige Montageleisten vorgesehen sind. Eine solche Konfiguration bietet ein hohes Maß an Biegesteifigkeit in alle senkrecht auf der Längsachse stehenden Richtungen, obwohl der Säulen-Korpus kein über seinen ganzen Umfang geschlossener Körper ist; andererseits bietet die Drittelung seines Innenraumes drei relativ große Sektionen, in denen auch voluminöse Armaturen bequem Platz finden.

Das Strangpreßprofil wird weiterhin dadurch noch formsteifer, daß zwei mit ihren Stegen zueinander und zu einer Symmetrie-Asche der Zugehörigen Sektion parallele, T-förmige Montageleisten an ihren den Gurten abgewandten Steg-Enden mit der jeweils benachbarten Trennwand verbundenen sind und ihre Gurte als Anschlag für Armaturen, Geräte aufnehmende Gehäuse dienen; die großflächigen Mantelstücke am äußeren Umfang des Säulen-Korpus werden auf diese Weise nicht belastet, gleichwohl können die Armaturen aber an den zusammen mit den Scheiteln der Trennwände einen sehr biegesteifen, axialen Bereich bildenden Montageleisten kräftig eingespannt werden, so daß sie sehr sicher lokalisiert sind und erhebliche Kräfte (Stecker!) unbeschadet aufnehmen können.

Um eine geschlossene Außenansicht der Versorgungs-Säule zu erhalten, können die Längsschlitze jeweils mit einem Deckel verschließbar sein, der dabei mit Hilfe mindestens eines Verbindungsstückes an der mindestens einen Montageleiste halterbar ist, wobei an den mit Armaturen besetzten Sektionen die Längsschlitze mit Zwei oder mehr Deckeln verschließbar gemacht werden können, zwischen denen jeweils mindestens ein Gehäuse in der zugehörigen Sektion angeordnet und darin befestigbar ist.

Eine solche Befestigung erfolgt in besonders einfacher Weise dadurch, daß das Verbindungsstück an dem/den Gurt(en) der Montageleiste(n) anschlägt und mit der/den Montageleiste(n) und/oder dem Deckel mit Hilfe einer Klemmverbindung verrastbar ist. Die Sektionen sind auf diese Weise sehr schnell ohne großen Aufwand und/oder spezielle Werkzeuge oder Fertigkeiten zu verschließen und genau so leicht wieder zu öffnen.

Im einzelnen ist es dabei zweckmäßig, wenn das Verbindungsstück eine an der/den Montageleiste(n) anliegende Auflageplatte aufweist, die mit mindestens zwei von ihr abgebogenen Haltefingern den/die Gurt(e) der Montageleiste(n) klemmend hinterfängt, so daß das Verbindungsstück einfach über die Montageleiste(n) geschoben wird und dort ohne weitere Hilfsmittel rastend fixierbar ist.

Besonders vorteilhaft ist die Befestigung des Verbindungsstückes an dem Deckel herstellbar, wenn es mindestens ein zu dem Deckel weisendes, elastisches Klemmstück aufweist und der Deckel mit mindestens einer an ihm vorgesehenen Klemmleiste so an das Verbindungsstück anlegbar ist, daß das Klemmstück die Klemmleiste(n) mit mindestens einem an seinem freien Ende befindlichen Druckstück hinterfängt, so daß hierbei wiederum keine zusätzlichen Verbindungselemente gebraucht werden. Das Klemmstück besteht dabei vorzugsweise aus zwei Klemmfingern, die zwischen zwei Klemmleisten einklemmbar sind, wobei die Klemmfinger und Klemmleisten vorzugsweise parallel zu der Symmetrie-Achse der zugehörigen Sektion angeordnet sind.

Ist die Anordnung so getroffen, daß die Druckstücke jeweils an einer schräg abgekanteten Druckfläche der Klemmleisten anliegen, die so geneigt angeordnet ist, daß durch die Klemmkraft der zugehörige Deckel so lange in Richtung auf die Längsachse der Versorgungs-Säule bewegt wird, bis er an deren Umfang anliegt, dann wird der Deckel gewissermaßen selbsttätig gespannt und in seine Endlage gezogen, sobald die Druckstücke in den Bereich der Druckfläche gelangt sind.

Der Säulen-Korpus und die Deckel können aus einem elektrisch leitenden oder nichtleitenden Werkstoff bestehen, am besten aus einem Leichtmetall, während für die Verbindungsstücke ein nichtleitender Kunststoff besser geeignet ist. Während eine Erdung des Säulen-Korpus bei dort durchgeführten elektrischen Stromleitungen problemlos möglich ist, ist das für die Deckel nicht ohne weiteres der Fall. Eine Erdung ist aber auch hier vorteilhafterweise gewährleistet, wenn die Trennwand mit einem zugehörigen Deckel jeweils mittels einem zur Erdung dienenden Kabel elektrisch leitend verbunden ist, wobei es für die Anfertigung der einzelnen, durchweg im Strangpreßverfahren hergestellten Teile günstig ist, wenn an den Trennwänden, den Verbindungsstücken und den Innenseiten der Deckel in der Längsachse der Versorgungs-Säule durchgehende, Schraubenschlitze ausbildende Halteleisten angeformt und in den Schraubenschlitzen jeweils die zur Erdung dienenden Kabel mittels Klemmschrauben befestigbar sind, wobei auch jeweils eine an das Verbindungsstück und an die benachbarte Trennwand angeformte Halteleiste einen Schraubenschlitz begrenzen können. Auf diese Weise wird bei diesen günstig im Strangpreßverfahren herstellbaren Teilen das durchgehende Profil nicht unterbrochen und auf diese Weise die Voraussetzung für ihre wirtschaftliche Herstellung geschaffen, obwohl die Klemmschrauben quer zur Längsrichtung der Teile verschraubt werden müssen.

Eine nach außen geschlossene Versorgungs- Säule wird beispielsweise dadurch ausgebildet, daß ihr Umfang außerhalb der Längsschlitze einem im Querschnitt annähernd kreisförmigen Verlauf folgt, wobei die so gebildeten Mantelstücke etwa mittig an die äußeren Endkanten der Trennwände angeformt sind.

Die erfindungsgemäße Versorgungs-Säule ist bei unterschiedlichen Raumhöhen zwischen einer Raumdecke und einem Raumboden einspannbar, wenn der Säulen-Korpus an dem/den Endstück(en) längsverschieb- und fixierbar ist, beispielsweise mittels an dem/den Endstück(en) mindestens einer in einem Langloch verschiebbaren Arretierschraube. Das Langloch ist zweckmäßig in jeweils einem Haltesteg vorgesehen, der an dem zugehörigen Endstück stirnseitig in Richtung auf die Versorgungs-Säule und zu deren Längsachse parallel verlaufend ausgebildet ist, wobei die Haltestege an den Gurten der T-förmigen Montageleisten anliegen können, die auf diese Weise in Mehrfachausnutzung einen weiteren Zweck erfüllen.

Es ist wie oben bereits dargelegt besonders nützlich, wenn die Versorgungs-Säule auch noch um ihre Längsachse drehbar ist, weil sie dann besser den an ihr anzuschließenden elektrischen Verbrauchern angepaßt werden kann. Zu diesem Zweck kann/können das/die gegen den Säulen-Korpus verdrehbare(n) Endstück(e) eine der Halterung der Versorgungs-Säule dienende Deckplatte und ein gegen diese verdrehbares, an dem Säulen-Korpus fixiertes Drehstück aufweisen. Ist dazu noch zwischen dem Drehstück und der Deckplatte ein Rastgesperre vorgesehen, so kann die Versorgungs-Säule in definierten Winkelstellungen leicht lösbar verrastet werden.

Da die Energiezuführung zumeist durch Kabel oder Schläuche erfolgt, die von einer ortsfesten Quelle gespeist werden, ist es vorteilhaft, wenn an dem Drehstück und an der Deckplatte Anschläge vorgesehen sind, die bei der Drehung des Drehstückes, dessen Drehwinkel begrenzend, aneinanderschlagen, so daß die Kabel oder Schläuche nicht überdreht werden können.

Die Versorgungs-Säule kann so aufgebaut sein, daß sie an beiden Stirnseiten drehbeweglich mit befestigbaren Endstücken ausgebildet ist, wobei ein Endstück als Säulenbasis und eine weiteres Endstück als Kapitell ausformbar sind; sie kann aber auch an einer Stirnseite durch einen Abschluß-Deckel abgedeckt sein. Auf diese Weise kann auch eine Aufstellung erfolgen, wenn die Versorgungs-Säule nicht bis zur Raumdecke reichen soll. Die Endstücke können zweckentsprechend verkleidet sein.

Weitere Vorteile und die Einzelheiten der Erfindung werden nachstehend an Hand der Zeichnung an einem Ausführungsbeispiel näher erläutert. Es zeigen
- Fig.1: eine Versorgungs-Säule nach der Erfindung mit einem hier zwischen einer Raumdecke und einem Raumboden eingespannten Säulen-Korpus,
- Fig.2: einen Querschnitt A - A aus Fig.1, etwas vergrößert und winkelversetzt,
- Fig.3: den Querschnitt der Fig.2, jedoch mit in verschiedenen Höhen befindlichen Einbauteilen,
- Fig.4: eine räumliche und stark verkürzte Ansicht des Säulen-Korpus aus Fig.1, etwas vergrößert,
- Fig.5: eine Einzelheit B aus der Fig.1 ohne den Säulen-Korpus, ebenfalls vergrößert und teilweise geschnitten,
- Fig.6: die Einzelheit B aus der Fig.1 in der Sprengdarstellung.
- Fig.7: die Versorgungs-Säule entsprechend Fig.1, jedoch mit verkleideten Endstücken,
- Fig.8: eine gegenüber Fig.1 etwas veränderte Ausführung der Versorgungs-Säule und
- Fig.9: eine Verkleidung für ein Endstück
sämtlich in schematischer Darstellung.

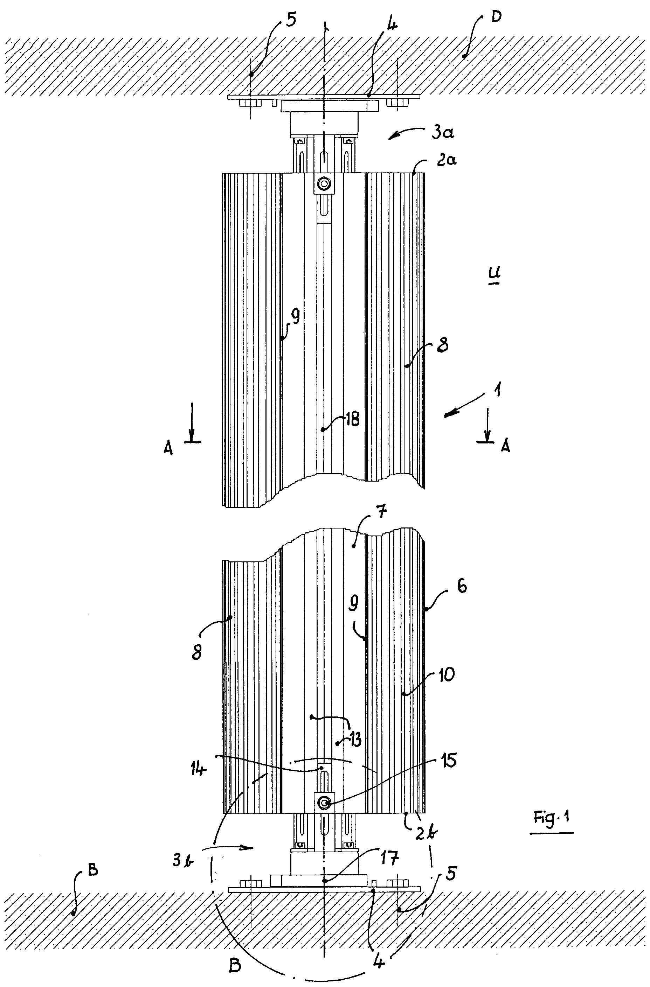

Eine senkrechte Versorgungs-Säule entsprechend der Erfindung besteht zunächst gemäß Fig.1 aus einem Säulen-Korpus 1 und an seinen beiden Stirnseiten 2a,b befestigten Endstücken 3a,b; das an der Stirnseite 2a befindliche Endstück 3a dient dabei als Einspannung an einer Raumdecke D, das andere Endstück 3b ist an einem Raumboden B fixiert, so daß die Versorgungs-Säule entsprechend die gesamte Raumhöhe einnimmt. Beide Endstücke 3 enden an ihrer der Raumdecke D bzw. dem Raumboden B zugewandten Stirnseite in je einer Deckplatte 4, die dort mit Ankerschrauben 5 gehaltert sind.

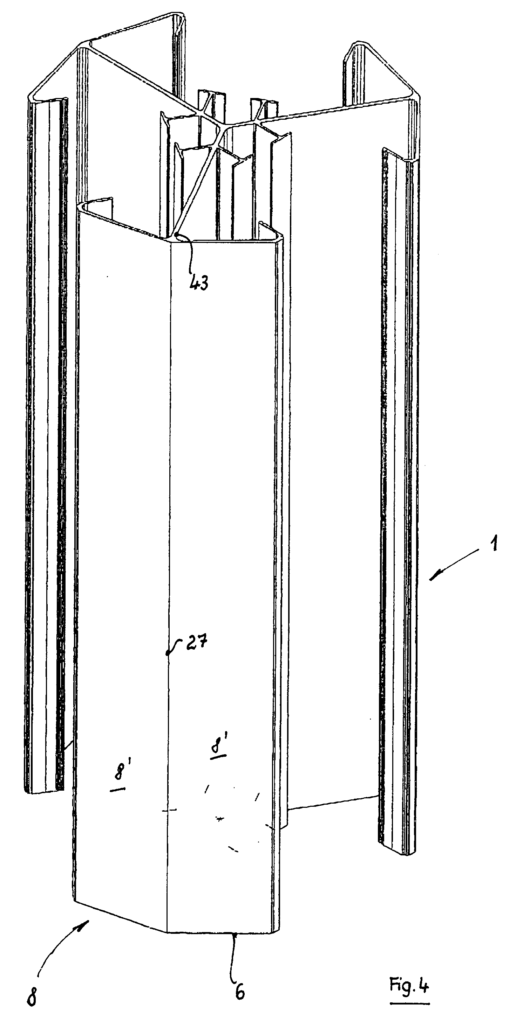

In der Fig.1 ist zu erkennen, daß der - im wesentlichen hohlzylindrisch ausgebildete - Säulen-Korpus 1 an seinem Umfang 6 durch Längsschlitze 7 teilweise zu der Umgebung U hin geöffnet ist, von denen hier ein Längsschlitz 7 sichtbar ist; die Längsschlitze 7 werden von streifenförmigen Mantelstücken 8 gerahmt, deren Längskanten 9 den jeweiligen Längsschlitz 7 begrenzen. Die Mantelstücke 8 können die Form eines Zylinder-Abschnittes haben, jedoch auch in anderer Konfiguration ausgeführt sein (beispielsweise in Teilstücken eben wie in der Fig.4, so daß sich im Querschnitt des Säulen-Korpus 1 Vielecke ergeben). Sie sind hier auf ihrer Oberfläche aus ästhetischen Gründen mit Kannelüren 10 versehen.

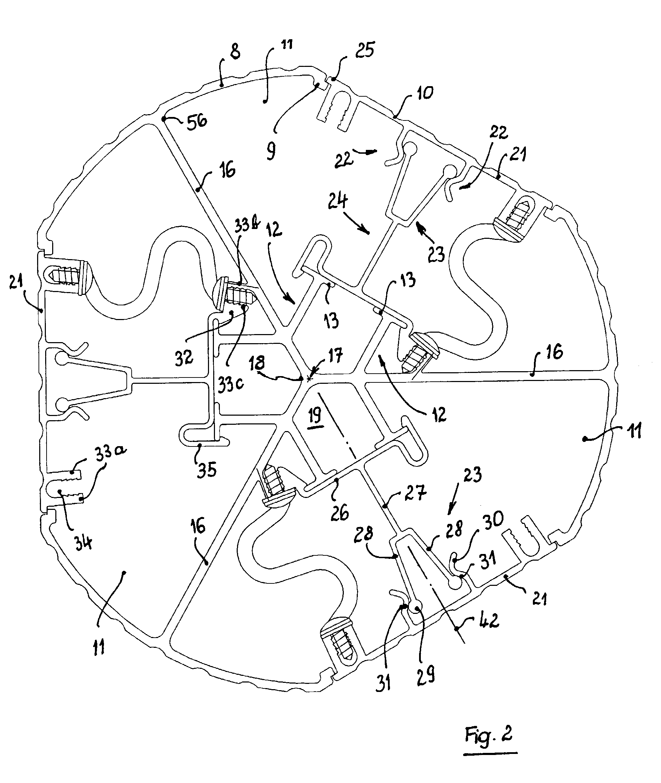

Die Längsschlitze 7 schließen jeweils (Fig.2) eine Sektion 11 in dem Säulen-Korpus 1 nach außen ab. In jeder dieser Sektionen 11 sind, parallel zu einer Symmetrie-Achse 42 der Sektion 11, zwei T-förmige Montageleisten 12 mit je einem radial nach außen weisenden Gurt 13 vorgesehen; die Gurte 13 werden zwischen den Montageleisten 12 von jeweils einem Haltesteg 14 hinterfangen, der an dem zugehörigen Endstück 3 stirnseitig vorgesehen ist und in den Säulen-Korpus 1 soweit hineinragt, daß er dort an den Montageleisten 12 mit einer Arretierschraube 15 klemmbar ist. Da sowohl die Montageleisten 12 an dem Säulen-Korpus 1 wie auch die Haltestege 14 an den Endstücken 3 achssymmetrisch vorgesehen sind, fluchten der Säulen-Korpus 1 und die Endstücke 3.

Die Sektionen 11 sind durch Trennwände 16 voneinander geschieden; die Trennwände 16 stoßen jeweils mit einer Zwickelkante 18 in der Nähe der Längsachse 17 des Säulen-Korpus 1 aneinander und sind (Fig.2) von der Zwickelkante 18 ausgehend radial nach außen gerichtet, so daß sie Zwickel 19 ausbilden, in denen die Montageleisten 12 vorgesehen sind.

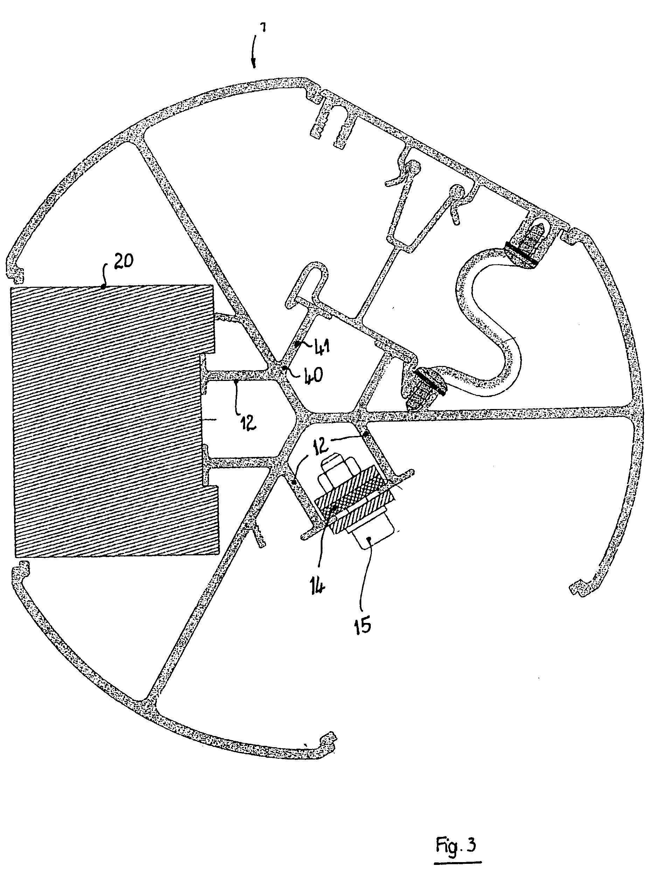

In der Fig.2 ist gut zu erkennen, daß der Innenraum des Säulen-Korpus 1 durch die jeweils um 120° gegeneinander winkelversetzt angeordneten Trennwände 16 in drei etwa gleich große (Raum-) Sektionen 11 aufgeteilt ist, in denen Armaturen wie Steckdosen, Schalter und dergleichen untergebracht werden können; sie sind in der Zeichnung weggelassen; allerdings ist in der Fig.3 ein zugehöriges Gehäuse 20 angedeutet. Die Trennwände 16 stoßen am Umfang 6 des Säulen-Korpus 1 jeweils mittig mit ihrer äußeren Randkante 56 auf ein Mantelstück 8; die Montageleisten 12 setzen ebenfalls an den Trennwänden 16 an, nahe den Zwickelkanten 18. Trennwände 16, Mantelstücke 8 und Montageleisten 12 bilden im wesentlichen und einstückig das Strangpreßprofil des Säulen-Korpus 1.

Die Längsschlitze 7 sind in der Fig.2 durchweg mit je einem Deckel 21 verschlossen; die Deckel 21 sind hier eben ausgeführt und ebenfalls mit äußeren Kannelüren 10 versehen. Ein einzelner Deckel 21 dient lediglich dazu, eine nicht benutzte Sektion 11 voll abzudecken. In der Regel ist jeder Längsschlitz 7 mit zwei oder mehr in Richtung der Längsachse 17 hintereinander liegenden Deckeln 21 verschlossen, zwischen denen sich die Armaturen befinden.

An den Deckeln 21 sind auf ihrer inneren, den Kannelüren 10 abgewandten Seite jeweils zwei parallele, benachbarte Klemmleisten 22 einstückig und symmetrisch angeformt, die jeweils über mindestens ein Klemmstück 23 gestülpt werden können, das an einem Verbindungsstück 24 ausgebildet ist. Jeder Deckel 21 ist mit einem oder mehreren Verbindungsstücken 24 an der Montageleiste 12 so befestigbar, daß seine sich parallel zu der Längsachse 17 erstreckenden Deckelkanten 25 an den Längskanten 9 aufliegen.

Das in Richtung der Längsachse 17 zumeist relativ kurze Verbindungsstück 24 besteht einstückig aus einer an den Gurten 13 der Montageleisten 12 anliegenden und mit diesen verrasteten Auflageplatte 26, einem Verbindungssteg 27 und dem Klemmstück 23.

Das Klemmstück 23 wird von zwei gespreizten, elastisch an dem Verbindungsstück 24 ansetzenden Klemmfingern 28 gebildet, an deren freien Enden jeweils ein hier massives und etwa zylindrisches Druckstück 29 angeformt ist. Die Druckstücke 29 sind so weit voneinander beabstandet, daß sie etwas zusammengedrückt werden, wenn die Klemmleisten 22 über das Klemmstück 23 geführt werden. An den Klemmleisten 22 ist zu diesem Zweck jeweils eine ensprechend angebogene Einführkante 30 ausgebildet; die Einführkanten 30 gehen in schräg abgekantete Druckflächen 31 über, an denen die Druckstücke 29 mit Vorspannung anliegen, wenn der Deckel 21 mit seinen Deckelkanten 25 anschlägt. Die spiegelsymmetrisch ausgebildeten, mehrfach abgefalteten Klemmleisten 22 bilden auf diese Weise zusammen mit dem Klemmstück 23 eine Verrastung des Deckels 21 an dem Säulen-Korpus 1, die so ausgeführt ist, daß die Deckelkanten 25 selbsttätig gegen die Längskanten 9 gezogen werden, wenn die Druckstücke 29 erst in den Bereich der Druckflächen 31 gelangt sind.

Eine weitere Verrastung des Verbindungsstückes 24 erfolgt wie oben bereits angedeutet an den Montageleisten 12. Dazu hinterfängt eine starre Spannleiste 32 einen der Gurte 13, ein spreizbarer Haltefinger 35 den anderen Gurt 13; die Spannleiste 32 und der Haltefinger 35 sind einstückig an der Ausflageplatte 26 angeformt.

Die Fig.2 zeigt weiterhin, daß die Deckel 21 elektrisch leitend mit dem geerdeten Strangpreßprofil des Säulen-Korpus 1 verbunden sind, so daß auch von den Deckeln 21 elektrische Ladungen abfließen, sobald diese montiert sind, und zwar auch dann, wenn die Verbindungsstücke 24 aus einem nichtleitenden Werkstoff, insbesondere einem Kunststoff, bestehen.

Zu diesem Zweck sind an den Innenseiten 38 der Deckel 21, den Trennwänden 16 und den Verbindungsstücken 24 Halteleisten 33 angeformt, von denen jeweils zwei einen Schraubenschlitz 34 begrenzen; in die Schraubenschlitze 34 sind (selbstschneidende) Klemmschrauben 39 eingeschraubt, mit denen jeweils ein Kabelende 36 eines elektrisch leitenden Kabels 37 festgeschraubt ist. An jedem der Deckel 21 befinden sich, axialsymmetrisch, zwei Paare von Halteleisten 33a, so daß die Deckelsymmetrie nicht gestört ist. An den Trennwänden 16 genügt eine Halteleiste 33b, die zusammen mit einer an der Spannleiste 32 befindlichen Halteleiste 33c ebenfalls einen Schraubenschlitz 34 bildet.

In der mit der Fig.2 im wesentlichen übereinstimmenden Darstellung der Fig.3 ist der Schnittverlauf etwas geändert in der Weise, daß der Schnitt A - A mehrmals senkrecht abgeknickt ist und zwar so, daß dabei sowohl ein Gehäuse 20 als auch die Befestigung eines der Endstücke 3 an dem Säulen-Korpus 1 zu sehen ist. Der Schnittverlauf ist in der Zeichnung weggelassen worden.

Das Gehäuse 20 ist hier nur ganz schematisch angedeutet; wie es in dem Strangpreßprofil des Säulen-Korpus 1 befestigt ist, wurde ebenso weggelassen wie seine konstruktiven, fachbekannten Einzelheiten. Es liegt nahe, das Gehäuse 20 an der Montageleiste 12 anzuschrauben. Hingegen ist Zu erkennen, daß der hier im Querschnitt sichtbare Haltesteg 14 mittels einer Arretierschraube 15 an den benachbarten Montageleisten 12 angeklemmt ist. Da die mit ihrem Steg-Ende 40 an den Trennwänden 16 ansetzenden Stege 41 der T-förmigen Montageleisten 12 relativ kurz sind, kommt eine starre Verbindung von Säulen-Korpus 1 und Endstück 3 zustande.

Die Fig.4 gibt den Säulen-Korpus 1 in räumlicher Darstellung wieder, wobei hier die Mantelstücke 8 aus zwei ebenen, einen stumpfen Winkel einschließende Streifen 8' bestehen und wobei ferner die Scheitelkante 27 des stumpfen Winkels mit der äußeren Endkante 43 der Trennwand 16 zusammenstößt. Auf diese Weise hat die Versorgungs-Säule im Querschnitt einen polyedrischen Umfang 6.

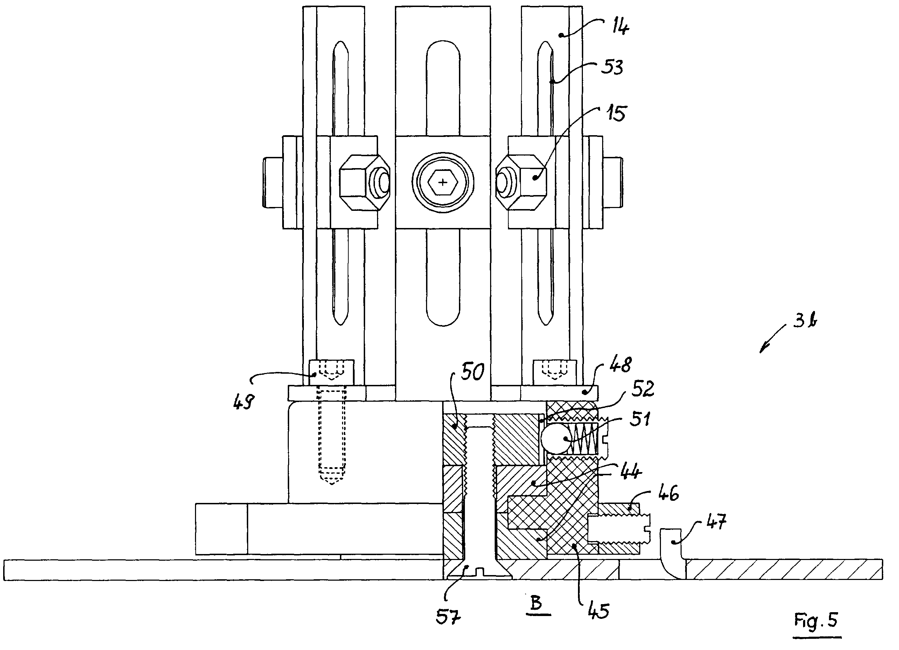

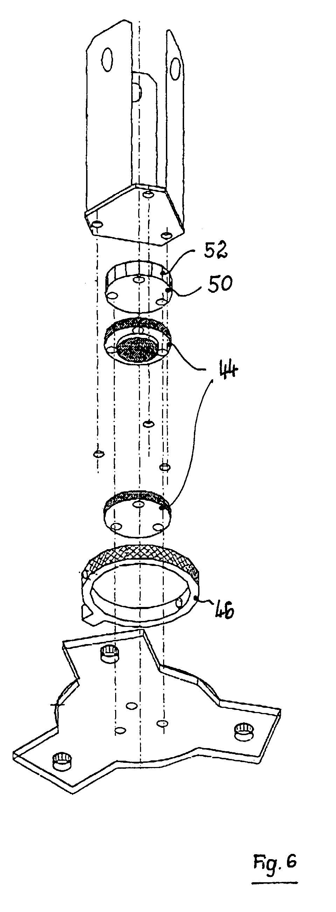

Bei der in den Fig.5,6 dargestellten Einzelheit B der Versorgungs-Säule ist ein reines Endstück 3b abgebildet; der zugehörige Säulen-Korpus 1 ist hier weggelassen.

Eine auf dem Raumboden B aufliegende und dort (Fig.1) mittels der Ankerschrauben 5 befestigbare Deckplatte 4 trägt ein geteiltes Drehlager 44, dessen Lagerringe ein Drehstück 45 axial fixieren, das in dem Drehlager 44 leicht drehbar ist. Das Drehstück 45 ist einerseits mit einem Dreh-Anschlag 46 versehen, der zusammen mit einem aus der Deckplatte 4 abgewinkelten Fest-Anschlag 47 eine Drehbegrenzung 46,47 des Drehstückes 45 und damit des Säulen-Korpus 1 bildet, weil andererseits das Drehstück 45 mit einer die Haltestege 14 verbindenden Basisplatte 48 mittels einiger Spannschrauben 49 verschraubt ist.

Das Drehlager 44 ist zusammen mit einem Rastring 50 an der Deckplatte 4 mittels Senkschrauben 57 befestigt. Der Rastring 50 wird dabei von dem Drehstück 45 umfangen, in dem eine gespannte Rastkugel 51 zusammen mit einer auf dem Umfang des Rastringes 50 befindlichen Rastung 52 ein Rastgesperre 51,52 ausbilden.

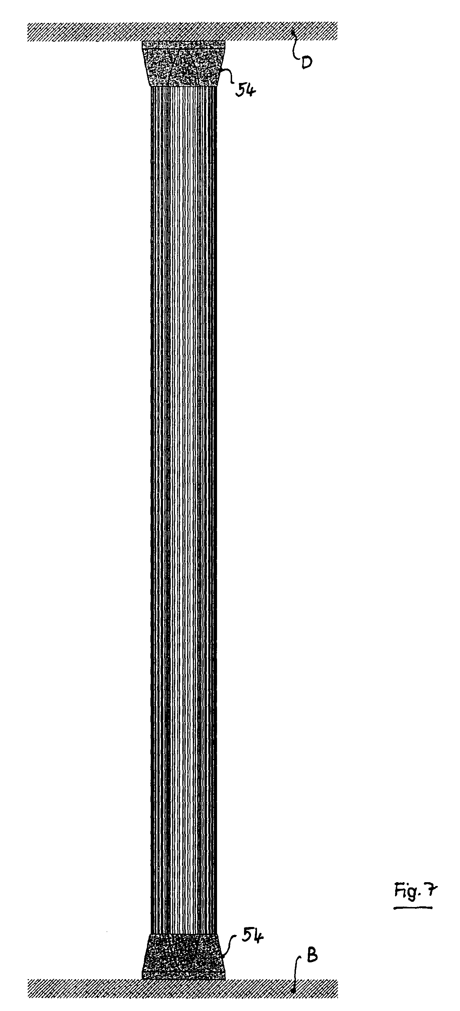

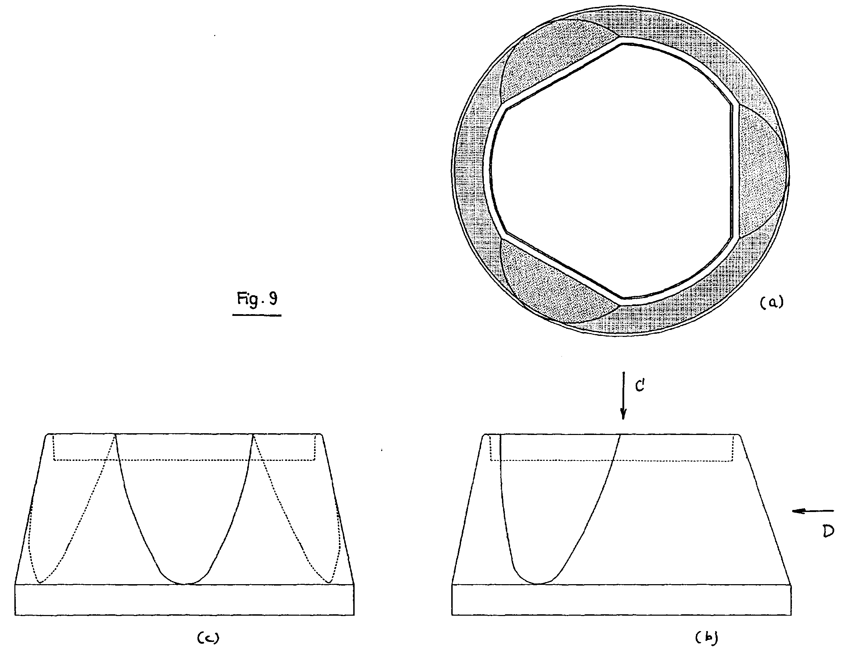

In der Fig.5 ist verdeutlicht, daß die Arretierschrauben 15 in Langlöchern 53 verschiebbar sind, die als Durchbrechungen in den Haltestegen 14 ausgebildet sind, so daß die Versorgungs-Säule in gewissem Umfang der Raumhöhe angepaßt werden kann. Die Versorgungs-Säule ist dann wie in der Fig.7 zwischen Raumdecke D und Raumboden B an beliebiger Stelle des Raumes spannbar; ihre Endstücke 3 sind in der dargestellten Weise mit einer Verkleidung 54 überfangen, die den Säulen-Charakter der Anordnung betont und an dem Raumboden B eine Säulenbasis, an der Raum-Decke D - umgekehrt aufgesetzt - ein Säulenkapitell zitiert; die Verkleidung 54 ist ausführlich in Fig.9 in mehreren Teilfiguren in der Anordnung als Säulenbasis dargestellt, wobei die Teilfig.9a eine Draufsicht C und die Teilfig.9c eine Ansicht D aus der Hauptansicht der Teilfig.9b darstellen.

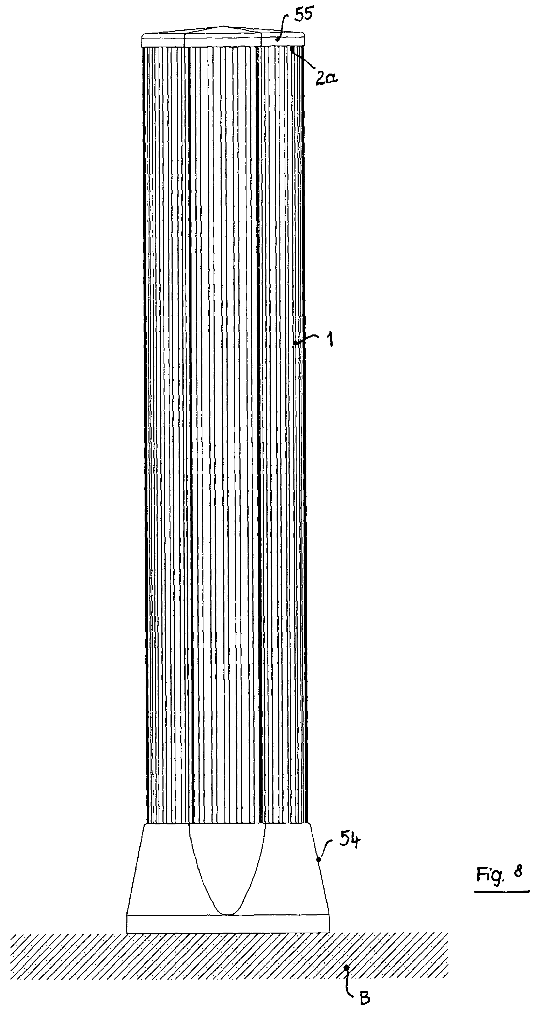

Die Versorgungs-Säule nach der Erfindung muß nicht notwendig mit zwei Endstücken 3 versehen und zwischen zwei Raumwänden einspannbar sein. Vielmehr kann sie auch lediglich mit einem Endstück 3b (Fig.1) auf dem Raumboden B installiert sein, wie es die Fig.8 zeigt. Das Endstück 3b ist wiederum unter einer Verkleidung 54 verborgen, während auf der anderen Stirnseite 2a des Säulen-Korpus 1 ein Abschluß-Deckel 55 angebracht ist.

Der Verzicht auf die Darstellung der Armaturen in den Fig.7,8 macht die ästhetische Wirkung der Versorgungssäulen besonders deutlich.

### Aufstellung der verwendeten Bezugszeichen

- 1: Säulen-Korpus
- 2a,b: Stirnseite
- 3a,b: Endstück
- 4: Deckplatte
- 5: Ankerschraube
- 6: Umfang
- 7: Längsschlitz
- 8: Mantelstück
- 8': Streifen
- 9: Längskante
- 10: Kannelüre
- 11: Sektion
- 12: Montageleiste
- 13: Gurt
- 14: Haltesteg
- 15: Arretierschraube
- 16: Trennwand
- 17: Längsachse
- 18: Zwickelkante
- 19: Zwickel
- 20: Gehäuse
- 21: Deckel
- 22: Klemmleiste
- 23: Klemmstück
- 24: Verbindungsstück
- 25: Deckelkante
- 26: Auflageplatte
- 27: Scheitelkante
- 28: Klemmfinger
- 29: Druckstück
- 30: Einführkante
- 31: Druckfläche
- 32: Spannleiste
- 33a-c: Halteleiste
- 34: Schraubenschlitz
- 35: Haltefinger
- 36: Kabelende
- 37: Kabel
- 38: Innenseite
- 39: Klemmschraube
- 40: Steg-Ende
- 41: Steg
- 42: Symmetrie-Achse
- 43: Endkante
- 44: Drehlager
- 45: Drehstück
- 46: Dreh-Anschlag
- 47: Fest-Anschlag
- 48: Basisplatte
- 49: Spannschraube
- 50: Rastring
- 51: Rastkugel
- 52: Rastung
- 51,52: Rastgesperre
- 53: Langloch
- 54: Verkleidung
- 55: Abschluß-Deckel
- 56: Randkante
- 57: Senkschraube
- B: Raumboden
- D: Raumdecke
- U: Umgebung

## Patentansprüche

1. Versorgungs-Säule mit einer integrierten Energiezuführung, vorzugsweise einer elektrischen Stromzuführung, bestehend aus einem im wesentlichen hohlen Säulen-Korpus (1) und den Säulen-Korpus (1) stirnseitig abschließenden Endstücken (3), wobei der Säulen-Korpus (1) mit an die Energiezuführung anschließbaren Armaturen wie Steckdosen, Schaltern oder dergleichen bestückbar und die Versorgungs-Säule wandunabhängig installierbar ist,
dadurch gekennzeichnet, daß
der Säulen-Korpus (1) als in Richtung seiner Längsachse (17) verlaufendes Strangpreßprofil ausgebildet ist, dessen Querschnitt in mindestens zwei an dem Umfang (6) des Säulen-Korpus (1) mit jeweils einem Längsschlitz (7) zur Umgebung (U) hin offene, durch eine oder mehrere Trennwände (16) voneinander geschiedene Sektionen (11) unterteilt ist, in denen parallel zu der Längsachse (17) und dieser benachbart jeweils mindestens eine profilierte, durchgehende Montageleiste (12) für die Armaturen vorgesehen ist, und daß der SäulenKorpus (1) mit mindestens einem Endstück (3b) begrenzt drehbeweglich verbunden ist.

2. Versorgungs-Säule nach Anspruch 1, dadurch gekennzeichnet, daß der Säulen-Korpus (1) aus drei Sektionen (11) besteht, die durch - im Querschnitt des Säulen-Korpus (1) von der Längsachse (17) ausgehend - radial zu dem Umfang (6) des Säulen-Korpus (1) hin gerichtete Trennwände (16) voneinander geschieden sind, wobei jeweils zwei Trennwände (16) einen Winkel von 120° einschließen und an ihrer äußeren Randkante (56) einstückig und symmetrisch an - ungefähr dem kreiszylindrischen Umfang (6) der Versorgungs-Säule folgende - Mantelstücke (8) anschließen, von denen jeweils zwei mit ihren frei endenden Längskanten (9) einen der Längsschlitze (7) ausbilden, und wobei ferner in den Zwickeln (19) zwischen den Trennwänden (16) jeweils zwei parallele, T-förmige Montageleisten (12) vorgesehen sind.

3. Versorgungs-Säule nach Anspruch 1 oder 2, dadurch gekennzeichnet, daß zwei mit ihren Stegen (41) zueinander und zu einer Symmetrie-Achse (42) der zugehörigen Sektion (11) parallele, T-förmige Montageleisten (12) an ihren den Gurten (13) abgewandten Steg-Enden (40) mit der jeweils benachbarten Trennwand (16) verbundenen sind und ihre Gurte (13) als Anschlag für Armaturen, Geräte aufnehmende Gehäuse (20) dienen.

4. Versorgungs-Säule nach einem der Ansprüche 1 bis 3, dadurch gekennzeichnet, daß die Längsschlitze (7) jeweils mit einem Deckel (21) verschließbar sind, der dabei mit Hilfe mindestens eines Verbindungsstückes (24) an der mindestens einen Montageleiste (12) halterbar ist.

5. Versorgungs-Säule nach Anspruch 4, dadurch gekennzeichnet, daß die Längsschlitze (7) mit zwei oder mehr Deckein (21) verschließbar sind, zwischen denen jeweils mindestens ein Gehäuse (20) in der zugehörigen Sektion (11) angeordnet und darin befestigbar ist.

6. Versorgungs-Säule nach Anspruch 4 oder 5, dadurch gekennzeichnet, daß das Verbindungsstück (24) an dem/den Gurt(en) (13) der Montageleiste(n) (12) anschlägt und mit der/den Montageleiste(n) (12) und/oder dem Deckel (21) mit Hilfe einer Klemmverbindung verrastbar ist.

7. Versorgungs-Säule nach Anspruch 6, dadurch gekennzeichnet, daß das Verbindungsstück (24) eine an der/den Montageleiste(n) (12) anliegende Auflageplatte (26) aufweist, die mit mindestens zwei von ihr abgebogenen Haltefingern (35) den/die Gurt(e) (13) der Montageleiste(n) (12) klemmend hinterfängt.

8. Versorgungs-Säule nach Anspruch 6 oder 7, dadurch gekennzeichnet, daß das Verbindungsstück (24) mindestens ein zu dem Deckel (21) weisendes, elastisches Klemmstück (23) aufweist und der Deckel (21) mit mindestens einer an ihm vorgesehenen Klemmleiste (22) so an das Verbindungsstück (24) anlegbar ist, daß das Klemmstück (23) die Klemmleiste(n) (22) mit mindestens einem an seinem freien Ende befindlichen Druckstück (29) hinterfängt.

9. Versorgungs-Säule nach Anspruch 8 dadurch gekennzeichnet, daß das Klemmstück (23) aus zwei Klemmfingern (28) besteht, die zwischen zwei Klemmleisten (22) einklemmbar sind, wobei die Klemmfinger (28) und Klemmlei sten (22) vorzugsweise parallel zu der Symmetrie-Achse (42) der zugehörigen Sektion (11) angeordnet sind.

10. Versorgungs-Säule nach Anspruch 9 dadurch gekennzeichnet, daß die Druckstücke (29) jeweils an einer schräg abgekanteten Druckfläche (31) der Klemmleisten (22) anliegen, die so geneigt angeordnet ist, daß durch die Klemmkraft der zugehörige Deckel (21) so lange in Richtung auf die Längsachse (17) der Versorgungs-Säule bewegt wird, bis er an deren Umfang (6) anliegt.

11. Versorgungs-Säule nach einem der Ansprüche 4 bis 10, dadurch gekennzeichnet, daß die Trennwand (16) mit einem zugehörigen Deckel (21) jeweils mittels einem zur Erdung dienenden Kabel (37) elektrisch leitend verbunden sind.

12. Versorgungs-Säule nach einem der Ansprüche 4 bis 11, dadurch gekennzeichnet, daß an den Trennwänden (16), den Verbindungsstücken (24) und den Innenseiten (38) der Deckel (21) in der Längsachse (17) der Versorgungs-Säule durchgehende, Schraubenschlitze (34) ausbildende Halteleisten (33) angeformt und in den Schraubenschlitzen (34) jeweils die zur Erdung dienenden Kabel (37) mittels Klemmschrauben (39) befestigbar sind.

13. Versorgungs-Säule nach Anspruch 12, dadurch gekennzeichnet, daß jeweils eine an das Verbindungsstück (24) und an die benachbarte Trennwand (16) angeformte Halteleiste (33b,c) einen Schraubenschlitz (34) begrenzen.

14. Versorgungs-Säule nach einem der Ansprüche 1 bis 13, dadurch gekennzeichnet, daß ihr Umfang (6) außerhalb der Längsschlitze (7) einem im Querschnitt annähernd kreisförmigen Verlauf folgt, wobei die so gebildeten Mantelstücke (8) etwa mittig an die äußeren Endkanten (43) der Trennwände (16) angeformt sind.

15. Versorgungs-Säule nach einem der Ansprüche 1 bis 14, dadurch gekennzeichnet, daß der Säulen-Korpus (1) an dem/den Endstück(en) (3) längsverschieb- und fixierbar ist.

16. Versorgungs-Säule nach Anspruch 15, dadurch gekennzeichnet, daß der Säulen-Korpus (1) an seinem/seinen Ende(n) an dem/den Endstück(en) (3) mittels mindestens einer in einem Langloch (53) verschiebbaren Arretierschraube (15) fixierbar ist.

17. Versorgungs-Säule nach Anspruch 16, dadurch gekennzeichnet, daß das Langloch (53) in jeweils einem Haltesteg (14) vorgesehen ist, der an dem zugehörigen Endstück (3) stirnseitig in Richtung auf die Versorgungs-Säule und zu deren Längsachse (17) parallel verlaufend ausgebildet ist.

18. Versorgungs-Säule nach Anspruch 17, dadurch gekennzeichnet, daß die Haltestege (14) an den Gurten (13) der T-förmigen Montageleisten (12) anliegen.

19. Versorgungs-Säule nach einem der Ansprüche 1 bis 18, dadurch gekennzeichnet, daß das/die gegen den Säulen-Korpus (1) verdrehbare(n) Endstück(e) (3) eine der Halterung der Versorgungs-Säule dienende Deckplatte (4) und ein gegen diese verdrehbares, an dem Säulen-Korpus (1) fixiertes Drehstück (45) aufweist/aufweisen.

20. Versorgungs-Säule nach Anspruch 19, dadurch gekennzeichnet, daß zwischen dem Drehstück (45) und der Deckplatte (4) ein Rastgesperre (51,52) vorgesehen ist.

21. Versorgungs-Säule nach Anspruch 19 oder 20, dadurch gekennzeichnet, daß an dem Drehstück (45) und an der Deckplatte (4) Anschläge (46,47) vorgesehen sind, die bei der Drehung des Drehstückes (45), dessen Drehwinkel begrenzend, aneinanderschlagen.

22. Versorgungs-Säule nach einem der Ansprüche 1 bis 21, dadurch gekennzeichnet, daß sie an beiden Stirnseiten (2) drehbeweglich mit befestigbaren Endstücken (3) ausgebildet ist.

23. Versorgungs-Säule nach Anspruch 22, dadurch gekennzeichnet, daß ein Endstück (3b) als Säulenbasis und eine weiteres Endstück (3a) als Kapitell ausgeformt sind.

24. Versorgungs-Säule nach einem der Ansprüche 1 bis 23, dadurch gekennzeichnet, daß sie an einer Stirnseite (2a) durch einen Abschluß-Deckel (55) abgedeckt ist.
